(19) Europäisches Patentamt / European Patent Office / Office européen des brevets

(11) **EP 4 113 897 B1**

(12) **EUROPEAN PATENT SPECIFICATION**

(45) Date of publication and mention
of the grant of the patent:
**24.04.2024 Bulletin 2024/17**

(21) Application number: **21182660.7**

(22) Date of filing: **30.06.2021**

(51) International Patent Classification (IPC):
**H04L 9/08** $^{(2006.01)}$

(52) Cooperative Patent Classification (CPC):
**H04L 9/0852**

(54) **METHOD AND SYSTEM OF EXECUTING COHERENT OPTICAL COMMUNICATION USING CONTINUOUS-VARIABLE QUANTUM CRYPTOGRAPHY AND A REMOTE CV LASER SOURCE**

VERFAHREN UND SYSTEM ZUR AUSFÜHRUNG KOHÄRENTER OPTISCHER KOMMUNIKATION UNTER VERWENDUNG EINER KONTINUIERLICH VARIABLEN QUANTENKRYPTOGRAPHIE UND EINER ENTFERNTEN CV-LASERQUELLE

PROCÉDÉ ET SYSTÈME D'EXÉCUTION D'UNE COMMUNICATION OPTIQUE COHÉRENTE UTILISANT UNE CRYPTOGRAPHIE QUANTIQUE CONTINUE-VARIABLE ET UNE SOURCE LASER CV À DISTANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.01.2023 Bulletin 2023/01**

(73) Proprietor: **Deutsche Telekom AG**
**53113 Bonn (DE)**

(72) Inventors:
• **GUNKEL, Matthias**
**64291 Darmstadt (DE)**
• **WISSEL, Felix**
**64372 Ober-Ramstadt (DE)**

(74) Representative: **RDL Patentanwälte PartG mbB**
**Senefelderstrasse 26**
**70176 Stuttgart (DE)**

(56) References cited:
• **ADRIEN MARIE ET AL: "Self-coherent phase reference sharing for continuous-variable quantum key distribution", ARXIV.ORG, CORNELL UNIVERSITY LIBRARY, 201 OLIN LIBRARY CORNELL UNIVERSITY ITHACA, NY 14853, 12 May 2016 (2016-05-12), XP080700983,**
• **PIRANDOLA S ET AL: "Advances in Quantum Cryptography", ARXIV.ORG, CORNELL UNIVERSITY LIBRARY, 201 OLIN LIBRARY CORNELL UNIVERSITY ITHACA, NY 14853, 4 June 2019 (2019-06-04), XP081373072,**
• **YASUHIRO AOKI ET AL: "INPUT POWER LIMITS OF SINGLE-MODE OPTICAL FIBERS DUE TO STIMULATED BRILLOUIN SCATTERING IN OPTICAL COMMUNICATION SYSTEMS", JOURNAL OF LIGHTWAVE TECHNOLOGY, IEEE, USA, vol. 6, no. 5, 1 May 1988 (1988-05-01), pages 710-719, XP000006277, ISSN: 0733-8724, DOI: 10.1109/50.4057**

**Description**

The invention generally relates to the field of quantum cryptography and in particular to continuous-variable quantum key distribution (CV-QKD). The invention refers to a method of executing coherent optical communication using continuous-variable quantum cryptography with suppression of Brillouin scattering distortions. The invention also relates to a corresponding system.

Methods of executing coherent optical communication using quantum key distribution (QKD) are known in the state of the art. Quantum key distribution (QKD) defines different methods and protocols in the field of quantum communication that allow for the exchange of secure keys between two authenticated parties, commonly referred as Alice (emitter) and Bob (receiver). Two main types of QKD protocols are currently pursued: discrete variable (DV) quantum key distribution and continuous variable (CV) quantum key distribution. While DV-QKD relies on single photon detector technology, CV-QKD does not use single quantum variables, such as polarisation of single photons, but uses instead Gaussian pulses which vary in phase and amplitude. Quadrature-Amplitude-Modulation (QAM) is used here, which exactly defines four operating points corresponding to the four quadratures of the IQ-plane (alternatively referred to as XP-plane). Most of the current CV-QKD implementations perform the GG02 protocol, introduced by Grosshands and Grangler in 2003. Hereby, the quadratures of coherent states of light are modulated according to zero-centered Gaussian distribution. CV-QKD systems operate with a local oscillator (LO) that generates a reference signal needed for coherent detection and allows transforming the received single photons in electrical signals. Implementations with one laser at the emitter as source to prepare the modulated quadratures and a true local oscillator at the receiver require two very narrow line-width lasers that are frequency-locked. Such frequency-locking increases the experimental complexity of the system and is demanding to be maintained over time.

To overcome this problem, plug and play CV-QKD with true local oscillator was proposed by Huang et al. A single laser was used both as a true local oscillator and as the source to prepare the modulated quadratures. In a continued development, it was further proposed, as described for example in the document "plug and play continuous variable quantum key distribution for metropolitan networks" of R. Valivarthi et al., Nature 421, 238-241 (2003) to use two different fiber strands, one to distribute the laser signal from Bob to Alice and the other one to send quantum states from Alice to Bob. This type of implementation minimizes the noise from Rayleigh scattering and allows for the implementation of symmetric GG02 protocol with phase and amplitude modulation.

The disadvantage of an additionally required fiber strand is offset by the advantage of the simple plug and play CV-QKD implementation without specific phase-locked loop. Further, it is assumed that strong classical light can co-exist in both fiber strands. So far, a distance between Alice and Bob of 13km could be realised.

However, in order to further increase a realisable distance between Alice and Bob, it is necessary to increase the power of the injected CW signal at Bob to allow a stable operation of the control loops at Alice. That means that the power of the CW signal at Bob must not fall below a given threshold. The line-width of the CW laser is about 10 kHz and, thus, very narrow. While the narrowness of the line-width is a desired property within all experiments with lasers, such narrowness of line-width raises a problem in the present case, namely the appearance of Brillouin scattering effects, i.e. the appearance of instantaneous Brillouin scattering with subsequent stimulated amplification of those Brillouin components, the so-called stimulated Brillouin scattering. Spectrally, the scattering components of quartz glass are about 10-11 GHz below (Stokes-scattering) and symmetrically above (Anti-Stokes-scattering) the respective CW signal. The scattering components have a comparatively small bandwidth of about 25 MHz. This Brillouin effect particularly occurs with narrowband lasers, such as used by R. Valivarthi et al. If the power of the used laser exceeds a so-called stimulated Brillouin scattering (SBS) threshold, the backscattered light from the fiber due to the Brillouin effect strongly increases. Using a SSMF (Standard Single Mode Fiber), the SBS threshold is said in literature to be about 5,4 mW as described for example in Rainer Engelbrecht: "Nichtlineare Faseroptik, Grundlagen und Anwendungsbeispiele", Springer Vieweg. 2014., pages 283 ff. Other references, e.g. Lumentum: "Suppression of Stimulated Brillouin Scattering", https://resource.lumentum.com/s3fs-public/technical-library-items/brillouinscattering_tn_cms_ae.pdf" accessed on march 5, 2021, mention the SBS threshold even to be as low as 2,6 mW.

As a result of the backscattered Brillouin radiation, instabilities of the source laser may occur since the backscattered signal can penetrate the active amplification range of the laser, and thus, increase the line-width of the emitted radiation.

As Brillouin scattering is a well-known distortion within classical WDM (Wavelength Division Multiplex) systems, various compensation methods have been developed. The intentionally broadening of the spectrum of the CW laser has gained practical significance. An additional chirp is stamped on the CW signal, i.e. the CW signal is intentionally frequency modulated. As a result, the interaction length of the high-frequency sound wave stimulated by the Brillouin effect in the glass fiber is sufficiently short. The actual line-width of the CW signal remains unaffected by this. The peak of the CW laser is only continuously shifted over a part of the spectrum. Typical modulation frequencies are in the range of multiple 10 kHz, the frequency shift lies in the range of several hundred MHz.

In the case that the spectral width of the chirped CW laser is clearly higher than the intrinsic bandwidth of the SBS, the effective SBS distortion is reduced by a factor which is given by the frequency shift divided by the intrinsic bandwidth of the SBS, and the SBS threshold is increased by the same factor. The resulting effect is called 'dithering'.

However, such a frequency modulation may cause at the receiver side that two signal parts of the same CW laser overlap which have a predictable but arbitrary different optical frequency. Such a frequency shift has a direct impact on the resulting electrical signal which comprises the frequency difference of the locally injected chirped CW signal and the timely delayed chirped quantum signal. Such frequency difference causes and requires a complex signal processing.

It is therefore an objective of the invention to suggest a further improved method to execute optical communication using CV-QKD with a remote CW laser source which allows for further reducing Brillouin scattering distortions. Further objects of the invention are providing a corresponding system.

It is known in the art the following documents: $

XP080700983 "Self-coherent phase reference sharing for continuous-variable quantum key distribution" from ADRIEN MARIE ET AL published 12 May 2016 XP081373072 "Advances in Quantum Cryptography" PIRANDOLA S ET AL published 4 June 2019 XP000006277 "INPUT POWER LIMITS OF SINGLE-MODE OPTICAL FIBERS DUE TO STIMULATED BRILLOUIN SCATTERING IN OPTICAL COMMUNICATION SYSTEMS" published 1 May 1988

The invention is specified by the independent claims. The dependent claims specify favourable embodiments of the invention.

A first aspect of the invention is a method of executing coherent optical communication of quantum information between an emitter, Alice, and a distant receiver, Bob, connected by two optical channels, wherein the receiver comprises a CW laser, wherein the method comprises the steps of:

- at the receiver, producing a CW signal, using the CW laser,
- sending a part of the CW signal at a time $(t_i-T)$ through one of the two optical channels from the receiver to the emitter,
- at the emitter, deriving phase-coherently at least one optical pulse from the received part of the CW signal at cycle i, the at least one optical pulse being self-coherent with the CW laser,
- at the emitter, encoding quantum information $Quant_i$ and phase information $P_i$ onto a first optical pulse of the at least one optical pulse by using an encoding mechanism,

- sending the first optical pulse as quantum signal pulse through the other one of the two optical channels from the emitter to the receiver,
- at the receiver, measuring at time $t_i$ the quantum information $Quant_i$ and the phase information $P_i$ with a measurement device by matching the received first optical pulse with a corresponding LO pulse derived at time $t_i$ from the CW signal,

wherein a light beam emitted by the CW laser is frequency modulated to produce the CW signal with an instantaneous frequency $f(t)$ with

$$f(t_i - T) - f(t_i) = \varepsilon$$

wherein t is the time, T is the total round trip time from the receiver to the emitter to the receiver, $t_i$ is any time at which pulses from the emitter are received at the receiver, and $\varepsilon$ is a small offset frequency value which might even be equal to zero.

The proposed method is particularly used with continuous quantum key distribution (CV-QKD) with Gaussian modulated quadratures and true local oscillator. The proposed method avoids the need of frequency locking two narrow line-width lasers. Further, the method allows to minimize both Rayleigh scattering and Brillouin scattering by utilizing two independent optical channels and a specifically frequency modulated laser signal (CW signal) of a CW laser.

According to one embodiment of the proposed method, the following applies to the instantaneous frequency

$$f(t_i - T) - f(t_i) = 0,$$

$$\text{i.e. } \varepsilon = 0.$$

Thereby, the frequency modulation has a specific periodicity, wherein the period duration is an integer part of the round trip time T of the laser signal from the receiver, Bob, to the emitter, Alice, to the receiver Bob.

A single laser is used as both, as a true local oscillator and as the source to prepare the modulated quadratures, i.e. the quantum signal pulses. This CW laser is located at Bob and the produced CW signal is split in two parts, a first part and a second part, by using a beam splitter. The first part of the laser is used as true local oscillator for signal detection whereas the second part is sent to Alice trough one of the two optical channels. At Alice a polarization controller (PC) and a polarizing beam splitter (PBS) are used to filter the polarization modes, thus optimizing the performance of subsequent electro-optic modulators which function as encoding mechanism. Alice derives from the received second part of the CW signal, for example according to the GG02 protocol, coherent optical pulses with X and P quadratures modulated according to zero-centered Gaussian random distributions. For this purpose, Alice may use a coherent encoding mechanism comprising multiple electro-optic modulators. An amplitude modulator of the multiple electro-optic modulators is used to create and modulate a train of optical pulses, and a phase modulator of the multiple electro-optic modulators is used to encode phase information onto the optical pulses. Generally, Gaussian distributed quadratures are obtained by modulating the amplitude and the phase of the optical pulses according to a Rayleigh and a uniform random distribution, respectively.

According to a further embodiment, optical pulses with constant amplitude and no encoded phase information are generated as reference pulses. The reference pulses are interleaved between the modulated pulses, i.e. between the quantum signal pulses. The reference pulses allow Bob to compensate for phase drifts in the optical channels and retrieve the quadrature values of the quantum signal pulses sent by Alice. The amplitude of the reference pulses has to be much larger (e.g. about 500 times) than the amplitude of the quantum signal pulses in order to accurately recover the phase information of the optical pulses.

The coherent encoding mechanism may further comprise a field programmable gate array (FPGA) and a digital to analogue converter (DAC) that drive the electro-optic modulators.

At Bob, a polarization controller may be used to maximize a polarization overlap between the received optical pulses and the local oscillator for maximal interference. The received optical pulses are fed into an optical hybrid where they interfere with the local oscillator, i.e. with the first part of the CW signal that is used as local oscillator. The output of the optical hybrid is detected by photodetectors which provide measurements of X and P quadratures. The output of the photodetectors is digitized using an oscilloscope whose data is then collected and analysed.

According to the invention the CW laser is coupled with means to frequency modulate the light beam emitted by the CW laser to produce the CW signal with an instantaneous frequency $f(t)$ with

$$f(t_i - T) - f(t_i) = \varepsilon$$

wherein t is the time, T is the total round trip time from the receiver to the emitter to the receiver, $t_i$ is any time at which pulses from the emitter are received at the receiver, and $\varepsilon$ is a small offset frequency value which might even be equal to zero.

According to a possible embodiment, the CW laser is frequency modulated by injecting a frequency modulated injection current directly into the CW laser.

Alternatively, the CW laser is frequency modulated by using a phase modulator external to the CW laser to produce and insert a peak phase deviation and thereby a peak frequency deviation in the CW signal.

According to a further embodiment, at the receiver, measuring at time $t_i$ the quantum information $Quant_i$ and the phase information $P_i$ with the measurement device comprises determining a relative phase at interference at cycle i between the quantum signal pulse and a corresponding LO pulse by estimating a relative phase between at least one second optical pulse of the at least one optical pulse and corresponding LO pulses to perform a phase correction wherein the at least one second pulse is used as a reference pulse (which has already mentioned before), delayed with respect to the quantum signal pulse and sent with a fixed time offset with respect to the quantum signal pulse to the receiver, particularly interleaved between two successive quantum signal pulses. Since the first part of the CW signal at Bob and the quantum signal pulses from Alice have not been interferometrically stabilized, the phase of the quantum signal pulses drifts randomly and thereby the encoded information is scrambled. To take this into account, the reference pulses are sent in close conjunction to the quantum signal pulses. The phase information of the reference pulses is used to extract the encoded phase information onto the quantum signal pulses. Generally, the intensity of the reference pulses is typically much higher than that of the quantum signal pulses. The phase correction should compensate for fluctuations in the two independent optical channels.

It is also possible that the second pulse, i.e. the reference pulse, is derived simultaneously from the second part of the CW signal and that both, the reference pulse and the quantum signal pulse are sent simultaneously to Bob. Thereby, multiplexing techniques may be used by Alice. As simultaneous output of the second part of the CW signal the pulses are automatically phase-locked and therefore, self-coherent. At the receiver, the reference pulse and the quantum signal pulse are demultiplexed and one of the X and P quadratures of the quantum signal pulse is randomly measured using the corresponding LO pulse, i.e. the associated LO pulse. It is also possible that the reference pulse and the quantum signal pulse are derived simultaneously from the second part of the CW signal, and that the reference pulse is delayed with respect to the quantum signal pulse in a controlled manner, i.e. the phase shift between the reference pulse and the quantum signal pulse is well known.

The quantum signal pulse and the reference pulse are coherent, i.e. the phase relation between the quantum signal pulse and the reference pulse is known and stable over time.

The wording "deriving phase-coherently at least one optical pulse from the received part of the CW signal at cycle i" means that light from the at least one optical pulse is derived from the CW signal emitted by the CW laser at cycle i and that there is/are fixed phases between said optical pulses and/or between said optical pulses and the phase of the CW laser at cycle i.

According to a further embodiment, the CW laser is used at the receiver when measuring at the time $t_i$ the quantum information $Quant_i$ and the phase information $P_i$ as local local oscillator, LLO, to operate a coherent receiver and to perform homodyne or intradyne detection. The term "intradyne" refers to a coherent reception principle which is between the homodyne detector (advantage: electrical intermediate frequency being roughly at zero, challenge: higher technological effort for phase control) and the heterodyne detector (advantage: no optical phase control needed, challenge: high electrical processing bandwidth) and combines the advantages of both of them.

In the case that the received quantum signal pulses and the associated LO pulses have exactly the same frequency when being fed into the optical hybrid, a homodyne detector is used which directly receives the electric base band. No further electric mixer is necessary. If there is a very small intermediate frequency, i.e. $\varepsilon \neq 0$, $|\varepsilon|$ « 1$GHz$, the detector is called an intradyne one. A respective implementation of a transimpedance amplifier is simpler than with the homodyne detector.

Further, at Bob, there may be a polarization controller that is used to maximize the polarization overlap between the received pulses, i.e. the quantum signal pulses and the reference pulses, and the local oscillator, i.e. the associated LO pulses, for maximal interference. Both, the received optical pulses and the associated LO pulses are injected (input) into a 90° optical hybrid where they interfere with each other. Photodetectors are connected downstream of the optical hybrid. There may be two balanced photodetectors each being associated with two outputs of the optical hybrid such that all outputs of the optical hybrid are connected with one of the two photodetectors. Those two balanced photodetectors provide measurements of X and P quadratures. An oscilloscope is connected downstream with the photodetectors and used to digitize the respective output of the photodetectors.

According to one further embodiment of the proposed method, the instantaneous frequency $f(t)$ is described by any periodic function $f$ with a period length $\tilde{T}$ with $T = k\tilde{T}$ with k being an integer. A sawtooth frequency modulation can be chosen which generates the required periodicity of the frequency dithering such that the instantaneous frequency is given by:

$$f(t_i - T) - f(t_i) = \varepsilon$$

wherein T is the total round trip time from the receiver to the emitter to the receiver, $t_i$ is any time at which pulses from the emitter are received at the receiver, and $\varepsilon$ is a small offset frequency value which might even be equal to zero.

Herein, the function $f(t)$ is called periodic even if $\varepsilon$ is non-zero but very small. With respect to the total round trip T, $\varepsilon$ needs to be considered as nearly constant in a technical sense, i.e. as far as technically feasible.

According to a further embodiment of the proposed method, a repetition rate $a = \frac{1}{\tilde{T}}$ of the frequency modulation of the CW laser is chosen from the interval [1 kHz, 100kHz], subject to the condition $T = k\tilde{T}$.

With a distance of 50 km glass fiber (optical channel) between Alice and Bob and a light velocity of $2 \times 10^8 \, m/s$ the complete running time, i.e. the round trip time, is about 0,5 ms which corresponds to a minimum repetition rate of 2 kHz. Integer multiples of such repetition rate (modulation frequency), i.e. 4 kHz, 6 kHz etc. lead to the same result for the electronic signal at Bob. A typical time profile of the frequency dithering is the above-mentioned sawtooth profile. Other time profiles are also possible.

As already mentioned before, controlling the frequency modulation may be realised by a low frequency modulation of the injection current directly into the CW laser. Due to the thermal effect, not only the power but also the optical frequency of the CW laser is modulated. Alternatively, a phase shift and therewith a frequency shift can be generated using a phase modulator external from the CW laser.

It may be advantageous that the periodicity of the instantaneous frequency is not followed exactly, i.e.

$$f(t_i - T) - f(t_i) = \varepsilon$$

with $\varepsilon \neq 0$, $|\varepsilon|$ « 1$GHz$. According to the magnitude of $\varepsilon$, a small intermediate frequency is thus established in the resulting electrical signal behind the optical hybrid. Therewith, an implementation of a required transimpedance amplifier is simplified. An intradyne detector must be realised instead of a homodyne detector with intermediate frequency of zero.

Since the repetition rate of the frequency modulation is only roughly known, if one can estimate the glass fiber distance, or is completely unknown, a regulation mechanism is needed which slowly passes through the velocity of the dithering. The intermediate frequency is evaluated when the 500 times stronger reference pulses are just received. Sensibly, the control loop should start at roughly 1 kHz, which corresponds to a simple glass fiber distance of 100 km, and increase its repetition rate up to about 100 kHz, which corresponds to a simple glass fiber distance of about 1 km. These both threshold values are reasonable since CV-QKD systems typically cannot realise considerably longer distances for a secure key exchange and for very short distances the SBS threshold is not exceeded due to small laser power. The level width of the repetition rate should be passed reciprocally to the estimated distance range in correspondingly small steps.

It is an essential advantage of the inventive method that due to an appropriate low frequency modulation of the CW signal at the receiver, proposed according to the invention, the Brillouin scattering distortions can be significantly suppressed for plug-&-play CV-QKD systems as described, for example, by R. Valivarthi et al. in the document "Quantum key distribution using Gaussian-modulated coherent states", Nature 421, 238-241 (2003). An "appropriate" low frequency modulation means that the feedback structure of the pair of emitter and receiver is taken into account and that a respective periodicity of the frequency modulation is realised. Particularly, the frequency modulation must have a period time, which corresponds to an integer part of the round trip time of the CW signal from the receiver, i.e. the CW laser source, to the emitter and back to the receiver. With a small offset, i.e. $\varepsilon \neq 0$, $|\varepsilon| \ll 1GHz$, a small intermediate frequency of the mixed signal at the reception photodetectors at the receiver can be generated. Such small intermediate frequencies facilitate the design of the transimpedance amplifier at the receiver, which is connected downstream the optical hybrid. This means that higher power can be coupled into the optical channels with a same Brillouin scattering distortion. This allows for improved distances between Alice and Bob, particularly the distances between Alice and Bob can be lengthened.

The proposed method can be used with any approach with external feed-in of the LO signal, particularly also with classical communication systems, e.g. in PONs (Passive Optical Network).

A second aspect of the invention is a system comprising means to perform the steps of the inventive method as described herein.

According to a further aspect of the invention, a system for executing coherent optical communication of quantum information between an emitter and a distant receiver connected by two optical channels, a first channel and a second channel, is provided wherein the system comprises the emitter, the receiver and the two optical channels and further comprises:

- at the receiver, a CW laser configured to emit a light beam to produce a CW signal and to be used as a local local oscillator (LLO) to operate a coherent receiver,
- the first channel of the two channels being configured and reserved to send a part of the CW signal from the receiver to the emitter,
- at the emitter, means to derive phase-coherently at least one optical pulse from the received part of the CW signal received from the receiver at cycle i, the at least one optical pulse being self-coherent with the CW laser,
- at the emitter, an encoder to encode quantum information $Quant_i$ and phase information $P_i$ onto a first one of the one or two self-coherent optical pulses,
- the second channel of the two channels being configured and reserved to send the first optical pulse as quantum signal pulse from the emitter to the receiver,
- at the receiver, a measurement device configured to receive at time $t_i$ the quantum signal pulse and to measure the quantum information $Quant_i$ and the phase information $P_i$ by matching the received quantum signal pulse with a corresponding LO pulse derived at time $t_i$ from the CW signal

wherein the receiver is further configured to frequency modulate the light beam emitted by the CW laser to produce the CW signal with an instantaneous frequency $f(t)$ with

$$f(t_i - T) - f(t_i) = \varepsilon$$

wherein t is the time, T is the total round trip time from the receiver to the emitter to the receiver, $t_i$ is any time at which pulses from the emitter are received at the receiver, and $\varepsilon$ is a small offset frequency value which might even be equal to zero.

In further embodiments, the system further comprises at the receiver:

- a beam splitter used to split the CW signal of the CW laser in two parts, a first part and a second part, according to a given ratio, wherein the first part of the CW signal is to be used as a true local oscillator for homodyne or intradyne detection and the second part is to be sent to the emitter through the first optical channel,
- a polarization controller to maximize a polarization overlap between the received optical pulses and the corresponding LO pulses for maximal interference,
- a 90° optical hybrid with four outputs and used to be fed with the received optical pulses and the corresponding LO pulses for interference,
- two (balanced) photodetectors each connected to two of the four outputs of the 90° optical hybrid to provide measurements of X and P quadrates,
- an oscilloscope connected with the two photodetectors to digitize the provided measurements.

In preferred embodiments, the system further comprises at the emitter:

- a polarization controller and a polarizing beam splitter used to filter polarization modes of the received second part of the CW signal,
- a Gaussian modulation device used to generate the phase-coherently one or two optical pulses from the CW signal, i.e. from the second part of the CW signal, and to encode the quantum information $Quant_i$ and the phase information $P_i$ onto the first one of the one or two self-coherent optical pulses,
- a beam splitter and a photo detector used to optimize a bias set-point of the Gaussian modulation device.

In favourable embodiments, the system further comprises on the first optical channel and the second optical channel, respectively, dense wavelength division multiplexers to multiplex and de-multiplex light that is fed in the first optical channel and the second optical channel, respectively.

In very preferred embodiments, the receiver further comprises a frequency modulator device configured to frequency modulate the light beam emitted by the CW laser to produce the CW signal with the instantaneous frequency $f(t)$ with

$$f(t_i - T) - f(t_i) = \varepsilon$$

wherein t is the time, T is the total round trip time from the receiver to the emitter to the receiver, $t_i$ is any time at which pulses from the emitter are received at the receiver, and $\varepsilon$ is a small offset frequency value which might even be equal to zero.

In still a further embodiment, the frequency modulator device is realised by a phase modulator external to the CW laser to produce and insert a peak phase deviation and thereby a peak frequency deviation in the CW signal.

Alternatively, the frequency modulator device may be realised by a current injection means used to inject a frequency modulated injection current directly into the CW laser.

Further advantages and configurations of the invention become apparent from the following description and the enclosed drawings.

It shall be understood that the features described previously and to be described subsequently may be used not only in the indicated combinations but also in different combinations or on their own without leaving the scope of the present invention.

The invention is described in detail by means of one exemplary embodiment and with reference to the drawings. Like components are indicated by like reference numerals throughout the drawings.

    Fig. 1 schematically shows a block diagram of an embodiment of a system carrying out a method according to the invention.

    Fig. 2 schematically shows transmitted pulses from Alice (emitter) to Bob (receiver) where reference pulses are interleaved between the quantum signal pulses according to the invention.

    Fig. 3 schematically shows a periodic function $f(t)$ and a sawtooth frequency modulation as used according to an embodiment of the invention.

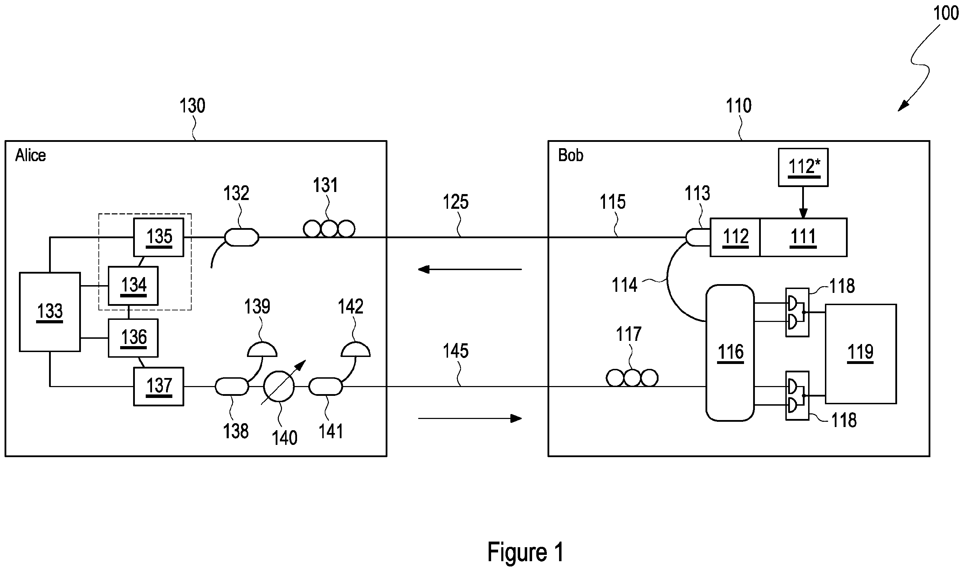

Figure 1 schematically shows a block diagram of an embodiment of a system 100 carrying out an embodiment of a method according to the invention. The system 100 comprises an emitter, Alice, 130, and a remotely localised receiver, Bob, 110, and two optical channels 125 and 145 connecting the emitter 130 and the receiver 110. A CW laser 111 is located at Bob 110. The CW laser 111 may have, for example, a wavelength in the range of about 1500 nm - 1600 nm, a line-width in the range of about 10 kHz, and a power in the range of about 50-60mW. A phase modulator 112 is connected downstream of the CW laser 111 in the direction of the transmission. A beam splitter 113 is connected downstream of the phase modulator 112 in the direction of light transmission. The phase modulator 112 is used to frequency modulate the light beam emitted by the CW laser 111. The phase modulator 112 is external to the CW laser 111, but directly connected to the CW laser 111. The phase modulator 112 produces and inserts a peak phase deviation in the CW signal and, thereby, a peak frequency deviation. Alternatively, the light beam generated by the CW laser 111 is frequency modulated by injecting a frequency modulated injection current from a current source 112* directly into the CW laser 111. The beam splitter 113 splits the CW signal produced by the CW laser 111 and phase modulated by the phase modulator 112, according to a predefined ratio of e.g. 90:10 in two parts, a first part 114 and a second part 115. The first part 114 corresponds to 90% of the CW signal and is used as a true local oscillator and is directly redirected to an optical hybrid 116. The optical hybrid 116 is realised, for example, as a 90° optical hybrid. The second part 115 corresponds to 10% of the CW signal and is sent as given part of the CW signal to the emitter, Alice, 130 through the first optical channel 125. Both, the first optical channel 125 and the second optical channel 145 are glass fibers and are independent from each other.

The CW signal is intentionally frequency modulated. As a result, an interaction length of a high-frequency sound wave stimulated by the Brillouin effect in the optical channels, i.e. glass fibers, when the CW signal is transmitted, is sufficiently short. The actual line-width of the CW signal remains unaffected by this. The peak of the CW laser 111 is only continuously shifted over a part of the spectrum. Typical modulation frequencies are in the range of multiple 10 kHz, the frequency shift lies in the range of several hundred MHz. According to one embodiment of the invention, the frequency modulation has a specific periodicity, wherein the period duration is an integer part of the round trip time T of the CW signal from the receiver, Bob, to the emitter, Alice, to the receiver Bob. With such a specific periodicity, the frequency modulation cannot cause at the receiver 110 that two signal parts of the same CW laser overlap which have a predictable but arbitrary different optical frequency when entering an optical hybrid 115. This is important since a frequency shift would have a direct impact on the resulting electrical signal which comprises the frequency difference of the locally injected part of the CW signal and the timely delayed quantum signal received from Alice 130. Such frequency difference would cause and require a complex signal processing. It can also be advantageous if the periodicity is not followed exactly, but if for the instantaneous frequency $f(t)$ of the CW signal rather holds: $f(t_i - T) - f(t_i) = \varepsilon$ with $\varepsilon \neq 0$, $|\varepsilon| \ll 1GHz$. According to the size of $\varepsilon$, a small intermediate frequency within the electric signal after the optical hybrid is thus set up. In such case an intradyne detector must be realised instead of a homodyne detector.

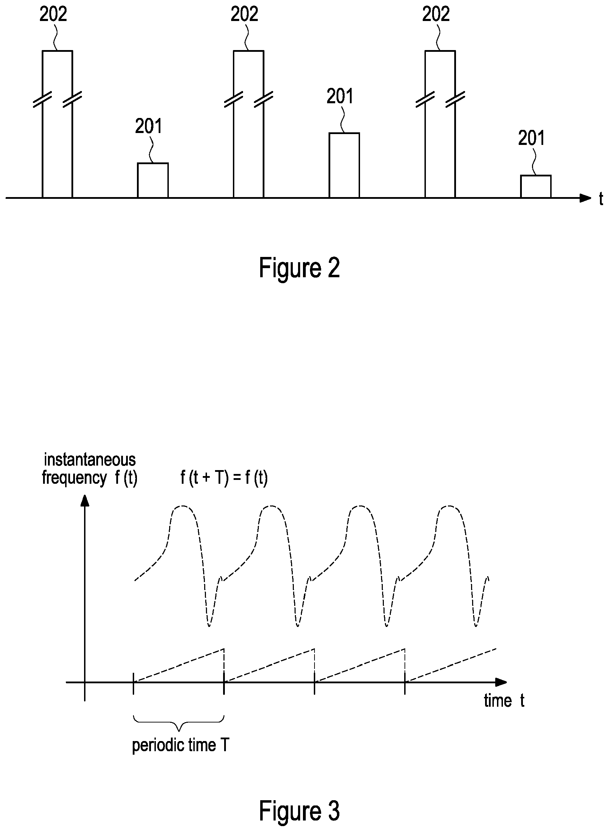

At the emitter, Alice, 130, a polarisation controller 131 and a polarising beam splitter 132 are used to filter the polarisation modes from the received second part of the CW signal and optimize a performance of the subsequent encoding mechanism. The encoding mechanism is realised by a number of electro-optic modulators, all of which being controlled and driven by a field programmable gate array, FPGA, 133 and a digital to analog converter (not shown) By means of the encoding mechanism, Alice 130 generates coherent quantum signal pulses with X and P quadratures. For this purpose, Alice 130 uses an amplitude modulator 134 to create and modulate a train of optical pulses, and a phase modulator 135 to encode phase information onto the optical pulses. The amplitude and the phase of the optical pulses are modulated, thus generating Gaussian distributed quadratures forming the coherent quantum signal pulses. Further, Alice 130 generates optical pulses with constant amplitude and no encoded phase information. These optical pulses serve as reference pulses and are interleaved, as shown in Figure 2, between the modulated optical pulses, i.e. the quantum signal pulses. The reference pulses allow the receiver 110 to compensate for phase drifts in the optical channels and retrieve the quadrature values sent by the emitter 130. At the emitter 130, a second amplitude modulator 136 is used to increase the extinction ratio of the optical pulses by modulating constant amplitude pulses that are overlapped to the optical pulses generated by the amplitude modulator 134. The amplitude of the reference pulses must be significantly larger than the amplitude of the quantum signal pulses in order to enable Bob 110 to accurately recover the phase information of the optical pulses. The amplitude of the reference pulses might be 500 times higher than the amplitude of the quantum signal pulses. The ratio between the amplitude of the reference pulses and the quantum signal pulses is set by the amplitude modulator 137. After the amplitude modulator 137, a beam splitter 138 and a photo detector 139 are arranged and used to optimize a respective bias set-point of the modulator. There is provided a variable optical attenuator VOA, 140 that is used to set an appropriate modulation variance that maximize the secret key rate for a given channel transmittance. A beam splitter 141 sends a major part of the light, i.e. of the optical pulses, to a power meter 142 to measure a mean photon number and the modulation variance which was set by the VOA 140. The modulation variance is known by Alice and Bob before starting the communication. The remaining part of the light, i.e. of the optical pulses, that is output by the beam splitter 141 and not sent to the power meter 142, is sent to the receiver, Bob, 110 through the second optical channel 145. At Bob 110, a polarization controller 117 is arranged and used to maximize a polarisation overlap between the received optical pulses sent by Alice 130, and the associated LO pulses derived from the first part 114 of the CW signal, i.e. of the local oscillator, for maximal interference. All incoming optical pulses, i.e. the pulses received from Alice 130 and the associated LO pulses 114, are fed into the optical hybrid 116 where the pulses from Alice interfere with LO pulses. The optical hybrid 116 has four outputs. The four outputs are detected by two balanced photodetectors, BD, 118 which provide measurements of the X and P quadratures of the optical pulses. The results of the measurements are digitized using an oscilloscope 119. The date of the oscilloscope 119 are collected and analysed.

Figure 2 shows transmitted pulses from Alice (emitter) to Bob (receiver) where reference pulses 202 are interleaved between quantum signal pulses 201 according to the invention. In figure 2 the pulses are plotted against time t. Since the CW laser 111 (also operating as local oscillator) located at Bob 110 and the quantum signal pulses 201 from Alice 130 have not been interferometrically stabilized, the phase of the quantum signal pulses 201 drifts randomly. Thereby, the encoded quantum information is not decipherable. Therefore, reference pulses 202 are sent from Alice 130 to Bob 110 in close conjunction to the quantum signal pulses 201. The reference pulses 202 are optical pulses with constant amplitude and no encoded phase information. The phase information of the reference pulses 202 is used to extract the encoded phase information onto the quantum signal pulses 201. In order to reduce the phase recovery noise, the intensity of the reference pulses 202 is typically much higher than that of the quantum signal pulses 201. The phase correction algorithm which is based on reference pulses 202 interleaved between the quantum signal pulses 201, allows Bob 110 to compensate for phase fluctuations in the two independent optical channels 125 and 145. Thus, Bob is enabled to retrieve the quadrature values of the quantum signal pulses sent by Alice 130. The effective distance the second part of the CW signal covers is twice the simple distance between Alice and Bob.

Since the repetition rate of the frequency modulation is only roughly known, if one can estimate the glass fiber distance, or is completely unknown, a regulation mechanism is needed which slowly passes through the velocity of the frequency dithering. The intermediate frequency is evaluated when the 500 times stronger reference pulses 202 (with respect to the quantum signal pulses 201) are just received at Bob 110, i.e. at the optical hybrid 116. Sensibly, the control loop should start at roughly 1 kHz, which corresponds to a simple glass fiber distance of 100 km, and increase its repetition rate up to about 100 kHz, which corresponds to a simple glass fiber distance of about 1 km. These both threshold values are reasonable since CV-QKD systems typically cannot realise considerably longer distances for secure key exchange, and for very short distances the SBS threshold is not exceeded due to small laser power. The level width of the repetition rate should be passed reciprocally to the estimated distance range in correspondingly small steps.

Figure 3 schematically shows an exemplary periodic function $f(t)$ for an instantaneous frequency of a frequency modulated CW signal and an associated sawtooth frequency modulation as used according to an embodiment of the invention. Figure 3 illustrates a representation of the function $f(t)$ and of the sawtooth frequency modulation as a function of time $t$, respectively. Both, the frequency modulation and the periodic function $f(t)$ have a periodic duration T and it applies: $f(t + T) = f(t)$ for all times $t$ when optical pulses from Alice are received by Bob.

**Reference Numerals**

| | |
|------|------|
| 100 | system |
| 110 | receiver, Bob |
| 111 | CW laser |
| 112 | phase modulator |
| 112* | current source |
| 113 | beam splitter |
| 114 | first part of the CW signal |
| 115 | second part of the CW signal |
| 116 | optical hybrid |
| 117 | polarization controller |
| 118 | photodetectors |
| 119 | oscilloscope |
| | |
| 125 | first optical channel |
| 145 | second optical channel |
| | |
| 130 | emitter, Alice |
| 131 | polarisation controller |
| 132 | polarising beam splitter |
| 133 | FPGA |
| 134 | amplitude modulator |
| 135 | phase modulator |
| 136 | amplitude modulator |
| 137 | amplitude modulator |
| 138 | beam splitter |
| 139 | photo detector |
| 140 | VOA |
| 141 | beam splitter |
| 142 | power meter |
| 201 | quantum signal pulses |
| 202 | reference pulses |

**Claims**

1. A method of executing coherent optical communication of quantum information between an emitter (130) and a distant receiver (110) connected by two optical channels (125, 145), wherein the receiver (110) comprises a CW laser (111), wherein the method comprises the steps of:

   - at the receiver (110), producing a CW signal, using the CW laser (111),
   - sending a part (115) of the CW signal at a time ($t_i$-T) through one of the two optical channels (125) from the receiver (110) to the emitter (130),
   - at the emitter (130), deriving phase-coherently at least one optical pulse from the received part (115) of the CW signal at cycle i, the at least one optical pulse being self-coherent with the CW laser (111),
   - at the emitter (130), encoding quantum information Quant$_i$ and phase information P$_i$ onto a first optical pulse of the at least one optical pulse by using an encoding mechanism,
   - sending the first optical pulse as quantum signal pulse through the other one (145) of the two optical channels (125, 145) from the emitter (130) to the receiver (110),
   - at the receiver (110), measuring at time t$_i$ the quantum information Quant$_i$ and the phase information P$_i$ with a measurement device by matching the received first optical pulse with a corresponding LO pulse derived at time t$_i$ from the CW signal,

   wherein a light beam emitted by the CW laser (111) is frequency modulated to produce the CW signal with an instantaneous frequency $f(t)$ with

   $$f(t_i - T) - f(t_i) = \varepsilon$$

   wherein T is the total round trip time from the receiver (110) to the emitter (130) to the receiver (110), $t_i$ is any time at which pulses from the emitter (130) are received at the receiver (110), and $\varepsilon$ is a small offset frequency value, $|\varepsilon| \ll 1GHz..$

2. The method according to claim 1 wherein the CW laser (111) is frequency modulated by injecting a frequency modulated injection current directly into the CW laser (111).

3. The method according to claim 1 wherein the CW laser (111) is frequency modulated by using a phase modulator (113) external to the CW laser (111) to produce and insert a peak phase deviation and thereby a peak frequency deviation in the CW signal.

4. The method according to any one of claims 1 to 3 wherein, at the receiver (110), measuring at time $t_i$ the quantum information $Quant_i$ and the phase information $P_i$ with the measurement device comprises determining a relative phase at interference at cycle i between the quantum signal pulse and a corresponding LO pulse by estimating a relative phase between at least one second optical pulse of the at least one optical pulse and corresponding LO pulses to perform a phase correction wherein the at least one second pulse is used as a reference pulse, delayed with respect to the quantum signal pulse and sent with a fixed time offset with respect to the quantum signal pulse to the receiver (110), particularly interleaved between two successive quantum signal pulses.

5. The method according to any one of the preceding claims wherein the CW laser (111) is used at the receiver (110) when measuring at the time $t_i$ the quantum information $Quant_i$ and the phase information $P_i$ as local local oscillator, LLO, to operate a coherent receiver and to perform homodyne or intradyne detection.

6. The method according to any one of the preceding claims wherein the instantaneous frequency $f(t)$ is described by any periodic function $f$ with a period length $\tilde{T}$ with $T = k\tilde{T}$ with k being an integer.

7. The method according to claim 6 wherein a repetition rate $a = \dfrac{1}{\tilde{T}}$ of the frequency modulation of the CW laser (111) is chosen from the interval [1kHz, 100kHz], subject to the condition $T = k\tilde{T}$.

8. A system for executing coherent optical communication of quantum information between an emitter (130) and a distant receiver (110) connected by two optical channels (125, 145), a first channel (125) and a second channel (145), wherein the system (100) comprises the emitter (130), the receiver (110) and the two optical channels (125, 145) and further comprises:

    - at the receiver (110), a CW laser (111) configured to emit a light beam to produce a CW signal and to be used as a local local oscillator to operate a coherent receiver,
    - the first channel (125) of the two channels (125, 145) being configured and reserved to send a part (115) of the CW signal from the receiver (110) to the emitter (130),
    - at the emitter (130), means to derive phase-coherently at least one optical pulse from the part (115) of the CW signal received from the receiver (110) at cycle i, the at least one optical pulse being self-coherent with the CW laser (111),
    - at the emitter (130), an encoder to encode quantum information $Quant_i$ and phase information $P_i$ onto a first one of the one or two self-coherent optical pulses,
    - the second channel (145) of the two channels (125, 145) being configured and reserved to send the first optical pulse as quantum signal pulse from the emitter (130) to the receiver (110),
    - at the receiver (110), a measurement device configured to receive at time $t_i$ the quantum signal pulse and to measure the quantum information $Quant_i$ and the phase information $P_i$ by matching the received quantum signal pulse with a corresponding LO pulse derived at time $t_i$ from the CW signal,

    wherein the receiver (110) is further configured to frequency modulate the light beam emitted by the CW laser (111) to produce the CW signal with an instantaneous frequency $f(t)$ with

    $$f(t_i - T) - f(t_i) = \varepsilon$$

    wherein T is the total round trip time from the receiver (110) to the emitter (130) to the receiver (110), $t_i$ is any time at which pulses from the emitter (130) are received at the receiver (110), and $\varepsilon$ is a small offset frequency value, $|\varepsilon| \ll 1\,GHz$.

9. The system according to claim 8, which further comprises at the receiver (110):

    - a beam splitter (113) used to split the light beam of the CW laser (111) in two parts, a first part (114) and a second part (115), according to a given ratio, wherein the first part (114) of the light beam is to be used as a true local oscillator for homodyne or intradyne detection and the second part (115) is to be sent to the emitter (130) through the first optical channel (125),
    - a polarization controller (117) to maximize a polarization overlap between the received optical pulses and the corresponding LO pulses for maximal interference,
    - a 90° optical hybrid (116) with four outputs and used to be fed with the received optical pulses and the corresponding LO pulses for interference,
    - two (balanced) photodetectors (118) each connected to two of the four outputs of the 90° optical hybrid (116) to provide measurements of X and P quadrates,
    - an oscilloscope (119) connected with the two photodetectors (118) to digitize the provided measurements.

10. The system according to any one of claims 8 to 9, which further comprises at the emitter (130):

- a polarization controller (131) and a polarizing beam splitter (132) used to filter polarization modes of the received second part (115) of the CW signal,
- a Gaussian modulation device used to generate the phase-coherently one or two optical pulses from the received second part (115) of the CW signal and to encode the quantum information $Quant_i$ and the phase information $P_i$ onto the first one of the one or two self-coherent optical pulses,
- a beam splitter (138) and a photo detector (139) used to optimize a bias set-point of the Gaussian modulation device.

11. The system according to any one of claims 8 to 10 which further comprises on the first optical channel (125) and the second optical channel (145), respectively, dense wavelength division multiplexers to multiplex and de-multiplex light that is fed in the first optical channel (125) and the second optical channel (145), respectively.

12. The system according to any one of the claims 8 to 11, wherein the receiver (110) further comprises a frequency modulator device configured to frequency modulate the light beam emitted by the CW laser (111) to produce the CW signal with the instantaneous frequency $f(t)$ with

$$f(t_i - T) - f(t_i) = \varepsilon$$

with $\varepsilon$ being a small offset frequency value, $|\varepsilon|$ « $1GHz$.

13. The system according to claim 12, wherein the frequency modulator device is realised by a phase modulator (112) external to the CW laser (111) to produce and insert a peak phase deviation and thereby a peak frequency deviation in the CW signal.

14. The system according to claim 12, wherein the frequency modulator device is realised by a current injection means (112*) used to inject a frequency modulated injection current directly into the CW laser (111).

**Patentansprüche**

1. Verfahren zum Ausführen einer kohärenten optischen Kommunikation von Quanteninformation zwischen einem Sender (130) und einem entfernten Empfänger (110), die über zwei optische Kanäle (125, 145) verbunden sind, wobei der Empfänger (110) einen CW-Laser (111) umfasst, und wobei das Verfahren die folgenden Schritte umfasst:

- am Empfänger (110), Erzeugen eines CW-Signals mithilfe des CW-Lasers (111),
- Senden eines Teils (115) des CW-Signals zu einem Zeitpunkt $(t_i - T)$ über einen der zwei optischen Kanäle (125) vom Empfänger (110) zum Sender (130),
- am Sender (130), phasenkohärentes Ableiten mindestens eines optischen Impulses aus dem empfangenen Teil (115) des CW-Signals im Zyklus i, wobei der mindestens eine optische Impuls mit dem CW-Laser (111) selbstkohärent ist,
- am Sender (130), Kodieren der Quanteninformation $Quant_i$ und der Phaseninformation $P_i$ in einen ersten optischen Impuls des mindestens einen optischen Impulses unter Verwendung eines Kodiermechanismus,
- Senden des ersten optischen Impulses als Quantensignalimpuls über den anderen (145) der zwei optischen Kanäle (125, 145) vom Sender (130) zum Empfänger (110),
- am Empfänger (110), Messen der Quanteninformation $Quant_i$ und der Phaseninformation $P_i$ zum Zeitpunkt $t_i$ mit einer Messvorrichtung durch Abgleichen des empfangenen ersten optischen Impulses mit einem entsprechenden LO-Impuls, der zum Zeitpunkt $t_i$ aus dem CW-Signal abgeleitet wird,

wobei ein von dem CW-Laser (111) emittierter Lichtstrahl frequenzmoduliert wird, um das CW-Signal mit einer Momentanfrequenz $f(t)$ mit der Eigenschaft

$$f(t_i - T) - f(t_i) = \varepsilon$$

zu erzeugen, wobei T die Gesamtumlaufzeit vom Empfänger (110) zum Sender (130) zum Empfänger (110) ist, $t_i$ eine beliebige Zeit ist, zu der Impulse vom Sender (130) am Empfänger (110) empfangen werden, und $\varepsilon$ ein kleiner Offset-Frequenzwert, $|\varepsilon|$ « $1GHz$, ist.

2. Verfahren nach Anspruch 1, wobei der CW-Laser (111) frequenzmoduliert wird, indem ein frequenzmodulierter Injektionsstrom direkt in den CW-Laser (111) injiziert wird.

3. Verfahren nach Anspruch 1, wobei der CW-Laser (111) frequenzmoduliert wird, indem ein Phasenmodulator (113) außerhalb des CW-Lasers (111) verwendet wird, um eine maximale Phasenabweichung und damit eine maximale Frequenzabweichung im CW-Signal zu erzeugen und einzubringen.

4. Verfahren nach einem der Ansprüche 1 bis 3, wobei am Empfänger (110) das Messen der Quanteninformation Quant$_i$ und der Phaseninformation P$_i$ zum Zeitpunkt t$_i$ mit der Messvorrichtung das Bestimmen einer relativen Phase bei Interferenz im Zyklus i zwischen dem Quantensignalimpuls und einem entsprechenden LO-Impuls durch Abschätzen einer relativen Phase zwischen mindestens einem zweiten optischen Impuls des mindestens einen optischen Impulses und entsprechenden LO-Impulsen umfasst, um eine Phasenkorrektur durchzuführen, wobei der mindestens eine zweite Impuls als Referenzimpuls verwendet wird, in Bezug auf den Quantensignalimpuls verzögert wird, und mit einem festen Zeitversatz in Bezug auf den Quantensignalimpuls zum Empfänger (110) gesendet wird, insbesondere verschachtelt zwischen zwei aufeinanderfolgenden Quantensignalimpulsen.

5. Verfahren nach einem der vorhergehenden Ansprüche, wobei der CW-Laser (111) am Empfänger (110) bei der Messung der Quanteninformation Quant$_i$ und der Phaseninformation P$_i$ zum Zeitpunkt t$_i$ als lokaler Lokaloszillator, LLO, verwendet wird, um einen kohärenten Empfänger zu betreiben und eine homodyne oder intradyne Detektion durchzuführen.

6. Verfahren nach einem der vorhergehenden Ansprüche, wobei die Momentanfrequenz /(t) durch eine beliebige periodische Funktion $f$ mit einer Periodenlänge $\tilde{T}$ mit $T = k\tilde{T}$ beschrieben wird, wobei k eine ganze Zahl ist.

7. Verfahren nach Anspruch 6, wobei eine Wiederholrate $a = \frac{1}{\tilde{T}}$ der Frequenzmodulation des CW-Lasers (111) aus dem Intervall [1 kHz, 100 kHz] ausgewählt wird, wobei die Bedingung $T = k\tilde{T}$ gilt.

8. System zum Ausführen einer kohärenten optischen Kommunikation von Quanteninformation zwischen einem Sender (130) und einem entfernten Empfänger (110), die über zwei optische Kanäle (125, 145), einen ersten Kanal (125) und einen zweiten Kanal (145), verbunden sind, wobei das System (100) den Sender (130), den Empfänger (110) und die zwei optischen Kanäle (125, 145) umfasst und ferner umfasst:

   - am Empfänger (110), einen CW-Laser (111), der so konfiguriert ist, dass er einen Lichtstrahl emittiert, um ein CW-Signal zu erzeugen, und der als lokaler Lokaloszillator verwendet wird, um einen kohärenten Empfänger zu betreiben,
   - den ersten Kanal (125) der zwei Kanäle (125, 145), der so konfiguriert und reserviert ist, dass er einen Teil (115) des CW-Signals vom Empfänger (110) an den Sender (130) sendet,
   - am Sender (130), Mittel zum phasenkohärenten Ableiten mindestens eines optischen Impulses aus dem Teil (115) des vom Empfänger (110) im Zyklus i empfangenen CW-Signals, wobei der mindestens eine optische Impuls mit dem CW-Laser (111) selbstkohärent ist,
   - am Sender (130), einen Kodierer zum Kodieren der Quanteninformation Quant$_i$ und der Phaseninformation P$_i$ in einen ersten der ein oder zwei selbstkohärenten optischen Impulse,
   - den zweiten Kanal (145) der zwei Kanäle (125, 145), der so konfiguriert und reserviert ist, dass er den ersten optischen Impuls als Quantensignalimpuls vom Sender (130) zum Empfänger (110) sendet,
   - am Empfänger (110), eine Messvorrichtung, die so konfiguriert ist, dass sie zum Zeitpunkt t$_i$ den Quantensignalimpuls empfängt und die Quanteninformation Quant$_i$ und die Phaseninformation P$_i$ misst, indem sie den empfangenen Quantensignalimpuls mit einem entsprechenden LO-Impuls abgleicht, der zum Zeitpunkt t$_i$ aus dem CW-Signal abgeleitet wird,

wobei der Empfänger (110) ferner so konfiguriert ist, dass er den von dem CW-Laser (111) emittierten Lichtstrahl frequenzmoduliert, um das CW-Signal mit einer Momentanfrequenz $f(t)$ mit der Eigenschaft

$$f(t_i - T) - f(t_i) = \varepsilon$$

zu erzeugen, wobei T die Gesamtumlaufzeit vom Empfänger (110) zum Sender (130) zum Empfänger (110) ist, t$_i$ eine beliebige Zeit ist, zu der Impulse vom Sender (130) am Empfänger (110) empfangen werden, und $\varepsilon$ ein kleiner Offset-Frequenzwert, $|\varepsilon|$ « 1$GHz$, ist.

9. System nach Anspruch 8, am Empfänger (110) weiterhin umfassend:

   - einen Strahlteiler (113), der verwendet wird, um den Lichtstrahl des CW-Lasers (111) in zwei Teile, einen ersten Teil (114) und einen zweiten Teil (115), gemäß einem gegebenen Verhältnis aufzuteilen, wobei der erste Teil (114) des Lichtstrahls als echter lokaler Oszillator für die homodyne oder intradyne Detektion verwendet werden soll und der zweite Teil (115) über den ersten optischen Kanal (125) an den Sender (130) gesendet werden soll,
   - einen Polarisationsregler (117), um eine Polarisationsüberlagerung zwischen den empfangenen optischen Impulsen und den entsprechenden LO-Impulsen für eine maximale Interferenz zu maximieren,
- ein 90° optischer Hybrid (116) mit vier Ausgängen, der verwendet wird, um mit den empfangenen optischen Impulsen und den entsprechenden LO-Impulsen für die Interferenz gespeist zu werden,
- zwei (abgeglichene) Photodetektoren (118), die jeweils an zwei der vier Ausgänge des 90° optischen Hybrids (116) angeschlossen sind, um Messungen von X- und P-Quadraten zu liefern,
- ein Oszilloskop (119), das mit den zwei Photodetektoren (118) verbunden ist, um die gelieferten Messungen zu digitalisieren.

10. System nach einem der Ansprüche 8 bis 9, am Sender (130) weiterhin umfassend:

- einen Polarisationsregler (131) und einen polarisierenden Strahlteiler (132), die zum Filtern der Polarisationsmoden des empfangenen zweiten Teils (115) des CW-Signals verwendet werden,
- eine Gauß-Modulationsvorrichtung, die verwendet wird, um die phasenkohärenten ein oder zwei optischen Impulse aus dem empfangenen zweiten Teil (115) des CW-Signals zu erzeugen und die Quanteninformation $Quant_i$ und die Phaseninformation $P_i$ in den ersten der ein oder zwei selbstkohärenten optischen Impulse zu kodieren,
- einen Strahlteiler (138) und einen Photodetektor (139), die zur Optimierung eines Vorspannungs-Sollwerts der Gauß-Modulationsvorrichtung verwendet werden.

11. System nach einem der Ansprüche 8 bis 10, das ferner auf dem ersten optischen Kanal (125) bzw. dem zweiten optischen Kanal (145) Dichte-Wellenlängen-Multiplexer umfasst, um Licht, das in den ersten optischen Kanal (125) bzw. den zweiten optischen Kanal (145) eingespeist wird, zu multiplexen und zu demultiplexen.

12. System nach einem der Ansprüche 8 bis 11, wobei der Empfänger (110) ferner eine Frequenzmodulatorvorrichtung umfasst, die so konfiguriert ist, dass sie den von dem CW-Laser (111) emittierten Lichtstrahl frequenzmoduliert, um das CW-Signal mit der Momentanfrequenz $f(t)$ mit der Eigenschaft

$$f(t_i - T) - f(t_i) = \varepsilon$$

zu erzeugen, wobei $\varepsilon$ ein kleiner Offset-Frequenzwert, $|\varepsilon| \ll 1\,GHz$, ist.

13. System nach Anspruch 12, wobei die Frequenzmodulatorvorrichtung durch einen Phasenmodulator (112) außerhalb des CW-Lasers (111) realisiert ist, um eine maximale Phasenabweichung und damit eine maximale Frequenzabweichung im CW-Signal zu erzeugen und einzubringen.

14. System nach Anspruch 12, wobei die Frequenzmodulatorvorrichtung durch eine Strominjektionseinrichtung (112*) realisiert ist, die verwendet wird, um einen frequenzmodulierten Injektionsstrom direkt in den CW-Laser (111) zu injizieren.

**Revendications**

1. Procédé pour exécuter une communication optique cohérente d'informations quantiques entre un émetteur (130) et un récepteur distant (110) connecté par deux canaux optiques (125, 145), le récepteur (110) comprenant un laser CW (111), le procédé comprenant les étapes consistant à :

- produire, au niveau du récepteur (110), un signal CW à l'aide du laser CW (111),
- envoyer une partie (115) du signal CW à un moment donné ($t_i$-T) par l'un des deux canaux optiques (125) du récepteur (110) à l'émetteur (130),
- dériver en cohérence de phase, au niveau de l'émetteur (130), au moins une impulsion optique de la partie reçue (115) du signal CW au cycle i, la au moins une impulsion optique étant auto-cohérente avec le laser CW (111),
- coder, au niveau de l'émetteur (130), l'information quantique $Quant_i$ et l'information de phase $P_i$ sur une première impulsion optique de la au moins une impulsion optique à l'aide d'un mécanisme de codage,
- envoyer la première impulsion optique en tant qu'impulsion de signal quantique par l'intermédiaire du second (145) des deux canaux optiques (125, 145) de l'émetteur (130) au récepteur (110),
- mesurer à l'instant $t_i$, au niveau du récepteur (110), l'information quantique $Quant_i$ et l'information de phase $P_i$ au moyen d'un dispositif de mesure en appariant la première impulsion optique reçue à une impulsion LO correspondante dérivée du signal CW à l'instant ti,

un faisceau lumineux émis par le laser CW (111) étant modulé en fréquence pour produire le signal CW avec une fréquence instantanée $f(t)$,

$$f(t_i - T) - f(t_i) = \varepsilon$$

T étant la durée totale de l'aller-retour entre le récepteur (110) et l'émetteur (130) et le récepteur (110), $t_i$ étant tout moment auquel les impulsions de l'émetteur (130) sont reçues au récepteur (110), et $\varepsilon$ étant une petite valeur de fréquence de décalage, $|\varepsilon| \ll 1GHz$.

2. Procédé selon la revendication 1, le laser CW (111) étant modulé en fréquence par injection d'un courant d'injection modulé en fréquence directement dans le laser CW (111).

3. Procédé selon la revendication 1, le laser CW (111) étant modulé en fréquence à l'aide d'un modulateur de phase (113) externe au laser CW (111) pour produire et insérer un écart de phase maximal et, par conséquent, un écart de fréquence maximal dans le signal CW.

4. Procédé selon l'une quelconque des revendications 1 à 3, au niveau du récepteur (110), la mesure à l'instant $t_i$ de l'information quantique Quant$_i$ et de l'information de phase $P_i$ à l'aide du dispositif de mesure comprenant la détermination d'une phase relative à l'interférence au cycle i entre l'impulsion de signal quantique et une impulsion LO correspondante par estimation d'une phase relative entre au moins une seconde impulsion optique de la au moins une impulsion optique et les impulsions LO correspondantes pour effectuer une correction de phase, la au moins une seconde impulsion étant utilisée en tant qu'impulsion de référence, retardée par rapport à l'impulsion de signal quantique et envoyée au récepteur (110) avec un décalage temporel fixe par rapport à l'impulsion de signal quantique, particulièrement intercalée entre deux impulsions de signal quantique successives.

5. Procédé selon l'une quelconque des revendications précédentes, le laser CW (111) étant utilisé au niveau du récepteur (110) lors de la mesure à l'instant T de l'information quantique Quant$_i$ et de l'information de phase $P_i$ en tant qu'oscillateur local local, LLO, pour faire fonctionner un récepteur cohérent et effectuer une détection homodyne ou intradyne.

6. Procédé selon l'une quelconque des revendications précédentes, la fréquence instantanée /(t) étant décrite par toute fonction périodique f de longueur de période $\tilde{T}$ avec $T = kT,$ k étant un nombre entier.

7. Procédé selon la revendication 6, un taux de répétition $a = \frac{1}{\tilde{T}}$ de la modulation de fréquence du laser CW (111) étant choisi dans l'intervalle [1kHz, 100kHz], à condition que $T = k\tilde{T}$.

8. Système pour exécuter une communication optique cohérente d'informations quantiques entre un émetteur (130) et un récepteur distant (110) connectés par deux canaux optiques (125, 145), un premier canal (125) et un second canal (145), le système (100) comprenant l'émetteur (130), le récepteur (110) et les deux canaux optiques (125, 145) et comprenant en outre :

- au niveau du récepteur (110), un laser CW (111) configuré pour émettre un faisceau lumineux afin de produire un signal CW et d'être utilisé en tant qu'oscillateur local local pour faire fonctionner un récepteur cohérent,
- le premier canal (125) des deux canaux (125, 145) étant configuré et réservé pour envoyer une partie (115) du signal CW du récepteur (110) à l'émetteur (130),
- au niveau de l'émetteur (130), des moyens pour dériver en cohérence de phase au moins une impulsion optique de la partie (115) du signal CW reçue du récepteur (110) au cycle i, la au moins une impulsion optique étant auto-cohérente avec le laser CW (111),
- au niveau de l'émetteur (130), un codeur pour coder l'information quantique Quant$_i$ et l'information de phase $P_i$ sur une première des une ou deux impulsions optiques auto-cohérentes,
- le second canal (145) des deux canaux (125, 145) étant configuré et réservé pour envoyer la première impulsion optique en tant qu'impulsion de signal quantique de l'émetteur (130) au récepteur (110),
- au niveau du récepteur (110), un dispositif de mesure configuré pour recevoir à l'instant $t_i$ l'impulsion de signal quantique et pour mesurer l'information quantique Quant$_i$ et l'information de phase $P_i$ en appariant l'impulsion de signal quantique reçue à une impulsion LO correspondante dérivée à l'instant $t_i$ du signal CW,

le récepteur (110) étant en outre configuré pour moduler la fréquence du faisceau lumineux émis par le laser CW (111) pour produire le signal CW avec une fréquence instantanée $f(t),$

$$f(t_i - T) - f(t_i) = \varepsilon$$

T étant la durée totale de l'aller-retour entre le récepteur (110) et l'émetteur (130) et le récepteur (110), $t_i$ étant tout moment auquel les impulsions de l'émetteur (130) sont reçues au récepteur (110), et $\varepsilon$ étant une petite valeur de fréquence de décalage, $|\varepsilon| \ll 1GHz$.

9. Système selon la revendication 8, comprenant en outre au niveau du récepteur (110) :

- un diviseur de faisceau (113) utilisé pour diviser le faisceau lumineux du laser CW (111) en deux parties, une première partie (114) et une seconde partie (115), selon un rapport donné, la première partie (114) du faisceau lumineux devant être utilisée en tant que vrai oscillateur local pour une détection homodyne ou intradyne et la seconde partie (115) devant être envoyée à l'émetteur (130) par l'intermédiaire du premier canal optique (125),
- un contrôleur de polarisation (117) pour maximiser un chevauchement de polarisation entre les impulsions optiques reçues et les impulsions LO correspondantes pour interférence maximale,
- un hybride optique à 90° (116) à quatre sorties et utilisé pour recevoir les impulsions optiques et les impulsions LO correspondantes pour l'interférence,
- deux photodétecteurs (équilibrés) (118) connectés chacun à deux des quatre sorties de l'hybride optique à 90° (116) pour fournir des mesures des quadrates X et P,
- un oscilloscope (119) connecté aux deux photodétecteurs (118) pour numériser les mesures fournies.

10. Système selon l'une quelconque des revendications 8 à 9, comprenant en outre au niveau de l'émetteur (130) :

    - un contrôleur de polarisation (131) et un diviseur de faisceau polarisant (132) utilisés pour filtrer les modes de polarisation de la seconde partie reçue (115) du signal CW,
    - un dispositif de modulation gaussienne utilisé pour générer une ou deux impulsions optiques cohérentes en phase de la seconde partie reçue (115) du signal CW et pour coder l'information quantique $Quant_i$ et l'information de phase $P_i$ sur la première des une ou deux impulsions optiques auto-cohérentes,
    - un diviseur de faisceau (138) et un photodétecteur (139) utilisés pour optimiser une valeur de consigne de polarisation du dispositif de modulation gaussienne.

11. Système selon l'une quelconque des revendications 8 à 10, comprenant en outre sur le premier canal optique (125) et le second canal optique (145), respectivement, des multiplexeurs par répartition en longueur d'onde denses pour multiplexer et démultiplexer la lumière qui est fournie au premier canal optique (125) et le second canal optique (145), respectivement.

12. Système selon l'une quelconque des revendications 8 à 11, le récepteur (110) comprenant en outre un dispositif modulateur de fréquence configuré pour moduler la fréquence du faisceau lumineux émis par le laser CW (111) pour produire le signal CW avec la fréquence instantanée $f(t)$,

$$f(t_i - T) - f(t_i) = \varepsilon$$

$\varepsilon$ étant une petite valeur de fréquence de décalage, $|\varepsilon| \ll 1GHz$.

13. Système selon la revendication 12, le dispositif modulateur de fréquence étant réalisé par un modulateur de phase (112) externe au laser CW (111) pour produire et insérer un écart de phase maximal et, par conséquent, un écart de fréquence maximal dans le signal CW.

14. Système selon la revendication 12, le dispositif modulateur de fréquence étant réalisé par un moyen d'injection de courant (112*) utilisé pour injecter un courant d'injection modulé en fréquence directement dans le laser CW (111).

Figure 1

Figure 2

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. VALIVARTHI et al.** plug and play continuous variable quantum key distribution for metropolitan networks. *Nature,* 2003, vol. 421, 238-241
- **RAINER ENGELBRECHT.** Nichtlineare Faseroptik, Grundlagen und Anwendungsbeispiele. Springer Vieweg, 2014, 283
- **ADRIEN MARIE et al.** *Self-coherent phase reference sharing for continuous-variable quantum key distribution,* 12 May 2016

- **PIRANDOLA S et al.** *Advances in Quantum Cryptography,* 04 June 2019
- *INPUT POWER LIMITS OF SINGLE-MODE OPTICAL FIBERS DUE TO STIMULATED BRILLOUIN SCATTERING IN OPTICAL COMMUNICATION SYSTEMS,* 01 May 1988
- **R. VALIVARTHI et al.** Quantum key distribution using Gaussian-modulated coherent states. *Nature,* 2003, vol. 421, 238-241